# EUROPEAN PATENT SPECIFICATION

(11) **EP 2 961 247 B1**
(45) Date of publication and mention of the grant of the patent: **12.09.2018**
(21) Application number: 15173147.8
(22) Date of filing: 22.06.2015
(51) Int. Cl.: H05B 33/08

(54) **METHOD AND DEVICE OF SWITCHING MODE REGULATION OF LEDS**
LED REGELUNGSVERFAHREN UND SCHALTUNG MIT SPERRWANDLER
PROCÉDÉ ET CIRCUIT RÉGULATEUR À COMMUTATION POUR LEDS

(30) Priority: 23.06.2014 IT MI20141132
(43) Date of publication of application: 30.12.2015
(73) Proprietor: TCI Telecomunicazioni Italia S.r.l., 21047 Saronno (VA) (IT)
(72) Inventor: Legnani, Marco Alessandro, 21047 Saronno (VA) (IT); Librandi, Gianfranco, 22078 Turate (CO) (IT)
(74) Representative: Barbaro, Gaetano

(56) References cited:
- EP-A2- 1 830 606
- US-A1- 2012 329 397
- US-B1- 7 303 303

## Description

### TECHNICAL FIELD

This disclosure relates to power supplies for LED lamps and more in particular to a method and a related device for regulating in switching mode the luminous intensity of at least a solid state lamp.

### BACKGROUND

Electronic power supplies are used for powering low voltage LED lamps through AC electric mains. Power supplies convert the available AC voltage into a DC low voltage adapted to power LED diodes.

These power supplies have a primary side with input terminals connected to the electric mains and a secondary side with a bifilar output line for connecting the LED diodes. For safety reasons, the output line is isolated from the terminals connected to the electric mains.

The possibility of regulating the luminous intensity emitted from the LED lamp is typically contemplated by providing an additional regulation line connected to a button for turning on/off the LED lamps by pushing the button for a short time, and for varying their luminous intensity by pushing the button for a prolonged time. Numerous control algorithms are known for establishing how and how much the luminous intensity of the lamp must vary in function of the time duration in which the button is pushed. This control technique based on using a button or a monostable switch is well known to the skilled person with the expression "Push Button Dimming" or also "Push Button Control".

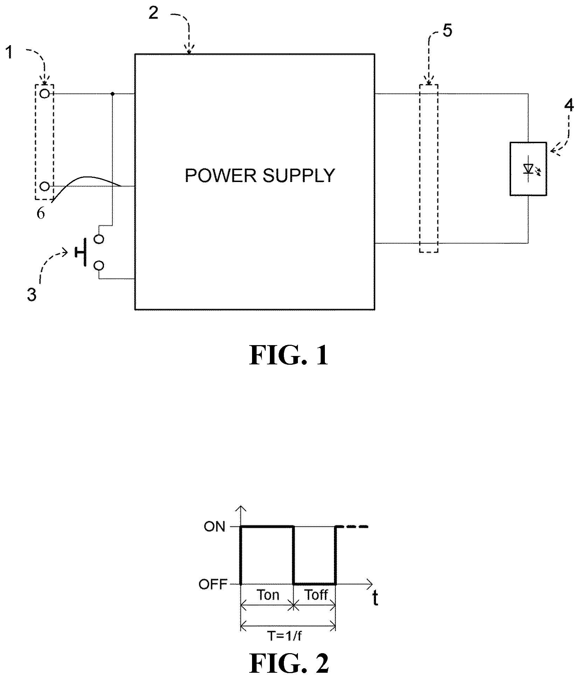

An example of application of this technique is depicted in figure 1. The power supply 2 has input terminals 1 connected to the AC mains and provides on its output terminals 5 a DC voltage or current adapted to supply the LED lamps 4. In order to regulate the luminous intensity emitted by the LED lamps, the power supply 2, that may also be for example a buck regulator, has an input 6 connected to a switch (button) 3, through which the LED lamps are turned on/off and regulated according to the so called "Push Button Dimming" technique. The luminous intensity of the LED lamp 4 is regulated by modulating the output (voltage or current) of the power supply 2 between two levels ON (turned on) and OFF (turned off) in PWM mode, as schematically illustrated in figure 2: Toff and Ton being respectively the intervals in which the LED lamp is respectively off and on. Eyes of observers see a mean luminous intensity proportional to the duty cycle D=Ton/T of the PWM signal and if its frequency f=1/T is sufficiently high, for example is 200Hz, human eye does not see a pulsed light, because of the phenomenon of persistence of vision.

This solution has numerous drawbacks. The power supply has a line and additional connection terminals for regulating and, in case of large plants in which more regulation points that may be handled by users are requested, it is necessary to install, aside the low voltage output line that supplies the LED lamps, an additional line with a terminal at the mains voltage, thus at a potentially dangerous voltage.

In literature LED lamps with intelligent buttons equipped with a microprocessor with a remote powering modulator are known, wherein pushing the "intelligent" button implies the emission of an encoded digital command received by the microprocessor available in each single lamp with LED diodes. A drawback of this solution is its relatively high cost that makes it hardly usable in most widespread applications.

US7,303,303, upon the disclosure of which the preamble of the independent claims is drafted, discloses a circuit with microprocessor for an illuminating apparatus comprising a LED unit, a light intensity regulation switch (S2) connected between the positive terminal of a power source (battery 11) and a dedicated terminal (terminal 5 of microprocessor).

### SUMMARY

An objective of the present disclosure is to provide a method of regulating and a related device that overcome the above mentioned drawbacks.

This objective is attained with a method of regulating in switching mode as defined in claim 1.

According to an embodiment, the method comprises the steps of:
a) counting the consecutive off time intervals during which the sensed voltage between the output terminals of the power supply is smaller than the threshold and stopping the count when the sensed voltage during an off time interval is greater than the threshold;
b) if the counting has been stopped and the number of intervals counted at point a) is smaller than a first value, then
   b1) if the duty-cycle is not null, generating the control signal so as to nullify the duty-cycle for keeping off the lamp and resetting the counting, otherwise
   b2) if the duty-cycle is null, generating the control signal so as to fix the duty-cycle at a nominal non-null value for turning on the lamp with a nominal average luminous intensity in a switching period and resetting the counting;
c) if the number of intervals counted at point a) is greater than or equal to the first value, varying the control signal for adjusting the value of the duty-cycle as far as the counting is stopped, thus resetting the counting.

A regulation device connectable to an outer power supply, that may be for example a buck or a flyback converter, and a regulation device that includes a buck or a flyback converter are also disclosed.

### BRIEF DESCRIPTION OF THE DRAWINGS

Figure 1 shows a power supply that powers a LED lamp, with a button for regulating the luminous intensity of the lamp according to a "Push Button Dimming" technique.
Figure 2 is a time graph of the supply voltage delivered by the power supply of figure 1.
Figure 3 depicts a regulation device according to an embodiment of the present disclosure that includes a power supply.
Figure 4 is a time graph of the supply voltage delivered by the power supply of figure 3.
Figure 5 depicts a regulation device according to another embodiment of the present disclosure connected to a distinct power supply.

### DETAILED DESCRIPTION

The present disclosure provides a method that may be implemented in a related regulation device having a power supply for LED lamps, the luminous intensity of which is regulated through PWM modulation of the output, that allows to realize a plant equipped with a single isolated low voltage bifilar line to which LED lamps to be supplied are connected as well as, with a cost efficient expedient, the buttons of the regulation points. By pushing a button it is possible to regulate the luminous intensity according to the Push Button Dimming technique. The method is applicable to voltage stabilized power supplies as well as current stabilized power supplies.

By summarizing, the supplied voltage/current delivered at the output of the power supply is sensed during off time intervals of the switching cycles and the switching duty-cycle is updated in function of the values sensed during a present and/or previous off time interval.

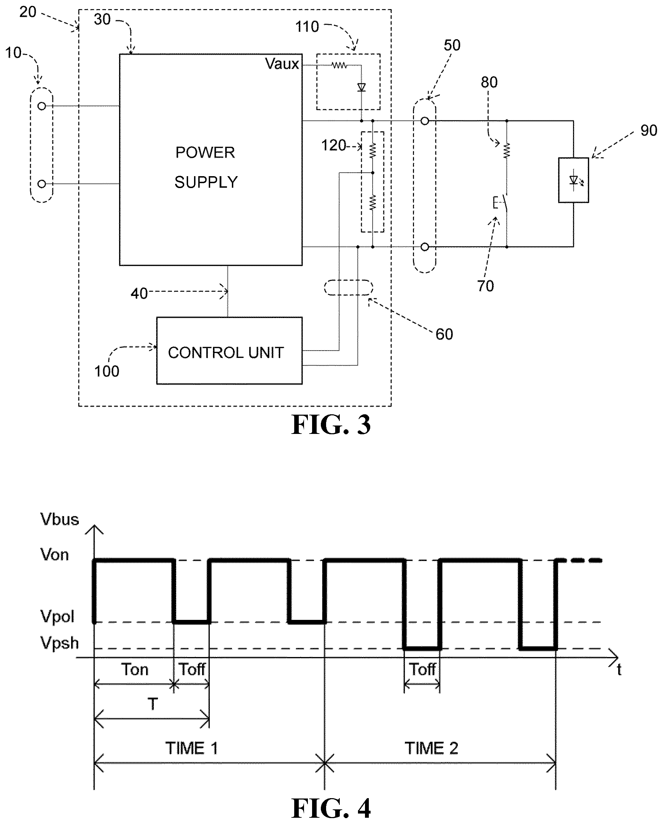

Figure 3 depicts an exemplary embodiment according to the present disclosure of a device for regulating in switching mode the luminous intensity of at least a solid state stabilized power supplies as well as current stabilized power supplies.

By summarizing, the supplied voltage/current delivered at the output of the power supply is sensed during off time intervals of the switching cycles and the switching duty-cycle is updated in function of the values sensed during a present and/or previous off time interval.

Figure 3 depicts an exemplary embodiment according to the present disclosure of a device for regulating in switching mode the luminous intensity of at least a solid state lamp, wherein the regulation device includes an AC/DC converter, so as for example a buck or flyback converter.

The power supply for LED lamps (20) has terminals (10) for the connection to electric mains and an output line (50) to which at least a LED lamp (90) is connected and at least a regulation button (70) with a series resistor (80).

The block POWER SUPPLY (30) is a switching mode power supply that delivers at its main output an ON-OFF voltage or a current modulated in a PWM mode by a control circuit CONTROL UNIT through a signal applied to an inner control line (40).

There are various methods known to the skilled persons for ON-OFF modulating the output of a power supply, for example by connecting a switch, for example a MOSFET, in series with the output, by applying the signal available at the inner control line to the MOSFET gate. In the case in which the power supply is current-regulated, numerous integrated circuits, well known to skilled persons, have been developed for driving the LED in a constant current mode, equipped with a control line for modulating ON-OFF the output current, thus they will not be illustrated in detail.

The switching power supply POWER SUPPLY (30) delivers preferably also an auxiliary voltage Vaux having a value smaller than a minimum value required for turning on the LEDs. This voltage, through a bias network (110) is applied to the output line (50) so as to ensure the presence of a voltage difference at the output terminals 50 also when the lamp 90 must be kept off. The bias network (110), conveniently, may contain a resistor, for limiting the delivered current, connected in series with a diode that is reverse-biased when the switching converter generates on the output terminals 50 a voltage adapted to turn on the lamp.

According to an innovative aspect, there is at least an electric bipole, electrically connected in parallel between the output terminals, having a monostable switch (button) normally in an open position connected in series with a resistive element 80 or with a diode (not shown in the figure). By pushing the button (70) a resistor (80) is connected in parallel with the output line (50). The resistor (80) conveniently may have a resistance determined so as to not absorb an excessive power from the output line during the on-time interval Ton of the PWM cycle, though absorbing a power adapted to cause during the off-time interval Toff of the PWM cycle a detectable variation of the voltage provided to the output line of the bias network (110). An appropriate resistance may be for example a resistance that cause a power absorption from the output line of 0.5W during the on-time interval Ton and that, cooperating with other electronic components, causes during the off-time interval Toff a drop of the bias voltage available at the output line (50) greater than 50%.

The control circuit CONTROL UNIT (100) applies to the inner control line (40) a control signal for varying the duty-cycle D of the switching cycles according to a requested light level. By means of a resistive voltage divider (120) connected between the output terminals 50, it monitors the voltage available at the output line (50) during an off-time interval Toff, and recognizes whether the button (70) has been pushed by a user.

Figure 4 is an exemplary time graph that illustrates the voltage (Vbus) available at the output terminals 50 of the device of figure 3.

During the interval "TIME 1" in which the button 70 is not pushed and thus the resistor 80 is isolated, the voltage at the terminals 50 is switched between two levels Von and Vpol. During the on-time Ton, the LEDs are turned on and the voltage Vbus is at the value Von; during the off-time interval Toff the LEDs are off and at the output there is the voltage Vpol applied by the bias network, a voltage that is smaller than the voltage for turning on the LEDs.

During the interval "TIME 2" at least a button connected between the output terminals 50 is pushed, thus the resistor 80 is inserted in a current path between the output terminals 50. As a consequence, the voltage available at the output terminals decreases down to the value Vpsh during off-time intervals, thus allowing the control circuit to determine that a button 70 has been pushed by reading the voltage available at the output line during the off-time interval Toff.

By counting the number of consecutive PWM cycles during which the button is kept pushed, it is possible to discriminate between a short pushing and a prolonged pushing of the button, and this information is usable in standard control algorithms, that are well known to the skilled persons in the art, for implementing the Push Button Dimming control technique.

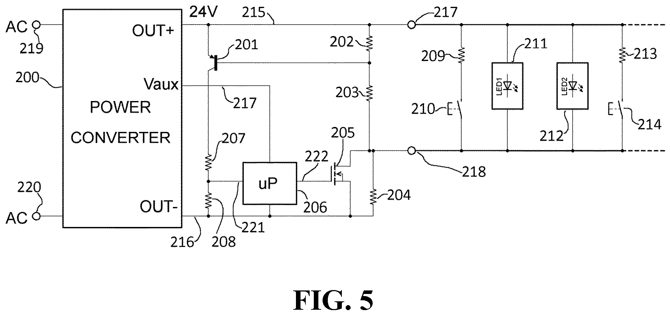

An alternative solution applicable for detecting a pushed button, consists in the use of a bias voltage having reversed polarity in respect to the polarity applied at the output during the on-time interval Ton and in the use of a diode instead of the resistor placed in series to the button, by connecting the diode so as pushing the button does not short the output throughout the diode thus turning off the LEDs during the on-time interval Ton. Another embodiment of a switching regulation device according to the present disclosure, applied to the case of a power supply delivering an output voltage, is shown in figure 5.

The regulation device comprises a power supply POWER CONVERTER equipped with a pair of input terminals (219, 220) for connection with electric mains and output terminals (217, 218) for connecting the LED lamps (211, 212) as well as one or more command buttons (210, 214) in series with respective series resistors (209, 214). The regulation device includes in this case all the components comprised between the input terminals (219, 220) and the output terminals (217, 218). The power supply, that may be an AC/DC converter (200) draws a power from the electric mains connected to the input terminals (219, 220) and delivers at the inner output terminals OUT+ (215) and OUT-(216) a DC voltage, typically of +24V. Preferably, the AC/DC converter delivers also at an inner auxiliary line (217) a voltage of +5V referred to the output terminal at the lowest potential (216), used as a reference terminal at a null potential.

A MOSFET (205), used to operate as a switch, allows to ON-OFF modulate in a PWM mode the LED lamps connected to the output terminals (217, 218) by varying their luminous intensity. A microprocessor (206), preferably powered throughout the inner auxiliary line at 5V (217), generates a PWM control signal applied to the gate of the MOSFET (222) used for modulating the LED lamps.

A circuit for sensing the voltage available between the output terminals is, in this case, a voltage divider composed of resistors (203, 204), that during the off-time interval Toff, without any button being pushed, biases the line connected to the output terminals (217, 218) with a voltage difference insufficient to turn on the LEDs, for example about 6V, but sufficient to bias a PNP transistor (201) so as to keep it on. With these values, the collector of the PNP transistor is at a voltage of +24V, thus the voltage divider composed of the resistors 207 and 208 provides a signal at a logic level 1 to the input terminal (221) of the microprocessor 206.

By pushing for example the button 210, the resistor 209 is inserted in parallel with the output terminals (217, 218), with the effect of reducing, during the off-time interval Toff, the value of the voltage difference available at the output terminals (217, 218 down to a value of about 0.5V, that is a value insufficient to bias the PNP transistor (201). As a consequence, the voltage available at the collector of the PNP transistor nullifies, thus the voltage divider composed of the resistors 207 and 208 provides a signal at a logic level 0 at the input 221 of the microprocessor 206, thus allowing the microprocessor to recognize the fact that a button has been pushed simply by controlling the logic level available at its input 221 during the off-time interval Toff.

A resistor (202) connected between the base and the emitter of the PNP transistor (201) allows to better define the minimum voltage value required for biasing the transistor.

By sensing the commands sent by a user by pushing the button, the microprocessor varies the duty-cycle of the PWM control signal applied to the gate of the MOSFET 205, turning on/off, regulating the luminous intensity of the LED diodes, in accordance to what is required by the Push Button Dimming technique.

The fact that the same microprocessor (206) generates the PWM control signal and monitors the signal available at the terminal (221), destined to detect the pushing of the button during the off-time interval Toff, makes this operation particularly simple, because no complex external synchronization signals are required. Certain components, the use of which is immediately evident for the skilled persons, such as for example filter capacitors, have not been shown because they are inessential for the comprehension of the functioning.

In an embodiment, the maximum duty-cycle is Dmax=94%, the frequency of the PWM modulating wave is 200Hz, the resistors 209, 213 have a value of 1.2kOhm. In this latter embodiment,
A) a maximum value Dmax for the duty-cycle D of the PWM modulation of the output is defined, for being sure that there will be a minimum time interval T1=(1-Dmax)*T inside which the output of the power supply and thus the LEDs are off;
B) at least a button having a series resistor is connected in parallel with the output line of the power supply that powers the LEDs, or as an alternative at least a button having a classic series diode with polarity adapted to not short directly the line, lowering the voltage at the LED that are on, while the button is pushed;
C) the biasing of the output of the power supply is ensured during the time interval T1 with a voltage source having a value smaller than that required for turning on the LEDs and at the same time current-limited in an appropriate fashion for allowing identification of the presence of the button pushed by reading, during the time interval T1, the occurred variation of the voltage available at the output of the power supply after pushing the button.

The microprocessor may be exploited for managing also additional functions, such as for example a low power stand-by mode, thus generating a logic signal used for placing the converter "POWER CONVERTER" in a stand-by state when the LED lamps are turned off.

The method illustrated in the present disclosure allows to realize easily also a table LED lamp equipped with external power supply, a single pair of low voltage isolated wires connects the power supply to the lamp, the button assembled in the body of the lamp allows users to turn on/off and to regulate the lamp in a safe condition.

## Claims

1. A method of regulating in a switching mode the luminous intensity of at least a solid state lamp (90; 211) connected between output terminals (50; 217, 218), comprising the steps of :
generating at said output terminals (50; 217, 218) during functioning a supply voltage/current (Vbus) to the lamp (90; 211) and switching it cyclically between:
- a first level (Von), adapted to turn on the lamp (90; 211) during on-time intervals;
- a second level (Vpol), adapted to turn off the lamp (90; 211) during off-time intervals;
- with a duty-cycle corresponding to a requested light level;
providing and electrically connecting between said output terminals (50; 217, 218) an electric bipole (80, 70; 209, 210) having a monostable switch (70; 210) normally in an open position connected in series with a resistive element (80; 209) or with a diode;
manually activating said monostable switch (70; 210) for electrically connecting said resistive element (80; 209) or diode to said output terminals (50; 217, 218);
**characterized in that** said method comprises the steps of
sensing a voltage value at said output terminals (50; 217, 218) during off-time intervals;
generating a control signal (40; 222), for varying said duty-cycle, to correspond to at least said voltage value sensed during a present and/or previous off-time interval.

2. Method of regulating according to claim 1, comprising varying said control signal (40; 222) through the following steps:
comparing with a threshold the voltage sensed between said output terminals (50; 217, 218) during an off-time interval;
varying said control signal (40; 222) to adjust by a pre-established value the duty-cycle in presence of at least two consecutive intervals in which the sensed voltage between said output terminals (50; 217, 218) is smaller than said threshold.

3. Method of regulating according to claim 2, further comprising the following steps:
a) counting consecutive off-time intervals during which the sensed voltage at said output terminals (50; 217, 218) is smaller than said threshold and stopping the counting when the sensed voltage during an off-time interval is greater than said threshold;
b) if the counting has been stopped and the number of intervals counted at point a) is smaller than a first value, then
b1) if said duty-cycle is not null, generating the control signal so as to nullify the duty-cycle for keeping off the lamp (210) and resetting said counting, otherwise
b2) if said duty-cycle is null, generating the control signal (222) so as to fix the duty-cycle at a nominal non-null value for turning on the lamp (210) with a nominal average luminous intensity in a switching period and resetting said counting;
c) if the number of intervals counted at point a) is greater than or equal to said first value, varying the control signal (222) for adjusting the value of the duty-cycle as far as the counting is stopped, thus resetting said counting.

4. A device for regulating in switching mode luminous intensity of at least a solid state lamp (90; 211) connected between output terminals (50; 217, 218), said device for regulating comprising:
a circuit (20) configured for generating at said output terminals (50; 217, 218) during the functioning a supply voltage/current (Vbus) of the lamp (90) and for switching it cyclically between a first level (Von), adapted to turn on the lamp (90) during on-time intervals, and a second level (Vpol), adapted to turn off the lamp (90) during off-time intervals, with a duty-cycle corresponding to a requested light level;
an electric bipole (80, 70; 209, 210) electrically connected between said output terminals (50; 217, 218) having a monostable switch (70; 210) to be manually activated and normally in an open position, connected in series with a resistive element (80; 209) or with a diode;
**characterized in that** it comprises
a sensing circuit (120; 202, 203) for sensing a voltage value at said output terminals (50; 217, 218) during off-time intervals;
a control circuit (100; uP) connected with the sensing circuit (120; 202, 203), configured for generating a control signal (40; 222), for varying said duty-cycle, to correspond to at least said voltage value sensed during a present and/or previous off-time interval.

5. The device for regulating of claim 4, wherein the sensing circuit (202, 203) is configured to generate a feedback voltage corresponding to the supply voltage/current of the lamp, and said control circuit (uP) comprises:
a threshold comparator (201, 207, 208) configured to compare with a threshold the feedback voltage sensed during off-time intervals and to generate a logic signal (221) having a value determined by the comparison;
a microprocessor (uP) configured to receive in input said logic signal (221) and to command the switching network for decrementing by a pre-established value the duty-cycle at each cycle in which the sensed feedback voltage is smaller than said threshold.

6. The device for regulating according to claim 5, wherein said microprocessor (uP) is further programmed for carrying out the following operations:
a) counting consecutive off-time intervals during which the sensed feedback voltage is smaller than said threshold and stopping the counting when the sensed voltage during an off-time interval is greater than said threshold;
b) if the counting has been stopped and the number of intervals counted at point a) is smaller than a first value, then
b1) if said duty-cycle is not null, generating the control signal (222) so as to nullify the duty-cycle for keeping off the lamp (210) and resetting said counting, otherwise
b2) if said duty-cycle is null, generating the control signal (222) so as to fix the duty-cycle at a nominal non-null value for turning on the lamp (210) with a nominal average luminous intensity in a switching period and resetting said counting;
c) if the number of intervals counted at point a) is greater than or equal to said first value, varying the control signal (222) for adjusting the value of the duty-cycle as far as the counting is stopped, thus resetting said counting.

7. The device for regulating of claim 5, wherein said threshold comparator (201, 207, 208) comprises:
a transistor (201) configured to be controlled with said feedback voltage and to operate in a conduction state when the feedback voltage is greater than said threshold or in an off state when the feedback voltage is smaller than said threshold;
a resistive network (207, 208), connected as a load of said transistor (201), having a terminal at which during the functioning a voltage corresponding to said logic signal (221) is made available.

8. The device for regulating according to one of claims from 5 to 7, wherein said sensing circuit comprises a resistive voltage divider (202, 203) having an intermediate tap at which said feedback voltage is made available.

9. The device for regulating according to one of previous claims, comprising a power supply having input terminals (10; 219, 220) configured to be connected to supply mains and output terminals (50; 217, 218) adapted to provide said supply voltage/current.

10. The device for regulating according to claims 5 and 9, wherein said power supply has an auxiliary terminal at which during the functioning an auxiliary DC voltage (Vaux) is made available, the auxiliary terminal being coupled to a supply terminal (217) of the microprocessor (uP).

## Patentansprüche

1. Ein Verfahren zum Regeln der Leuchtintensität wenigstens einer, zwischen zwei Ausgangsanschlüssen (50; 217, 218) angeschlossenen Festkörperlampe (90; 211) in einem Schaltbetrieb, umfassend die folgenden Schritte:
- Erzeugen einer (-es) Versorgungsspannung/-stroms (Vbus) für die Lampe (90; 211) an den besagten Ausgangsanschlüssen (50; 217, 218) während des Betriebs und zyklisches Umschalten derselben zwischen:
- einem ersten Niveau (Von), eingerichtet, um die Lampe (90; 211) während eines Ein-Zeitintervalls einzuschalten;
- einem zweiten Niveau (Vpol), eingerichtet, um die Lampe (90; 211) während eines Aus-Zeitintervalls auszuschalten;
- mit einem Tastverhältnis, das der verlangten Lichtstärke entspricht;
- Bereitstellen und elektrisches Anschließen eines elektrischen Bipols (80, 70; 209, 210) mit einem monostabilen, normalerweise offenen Schalter (70; 210) in Reihe mit einem Widerstandselement (80; 209) oder mit einer Diode zwischen den besagten Ausgangsanschlüssen (50; 217, 218);
- manuelles Aktivieren des besagten, monostabilen Schalters (70; 210) zum elektrischen Verbinden des besagten Widerstandselements (80; 209) oder der Diode mit den besagten Ausgangsanschlüssen (50; 217, 218);
**dadurch gekennzeichnet, dass** das Verfahren die folgenden Schritte umfasst:
- Sensieren eines Spannungswertes an den besagten Ausgangsanschlüssen (50; 217, 218) während der Aus-Zeitintervalle;
- Erzeugen eines Steuersignals (40; 222) zur Variation des besagten Tastverhältnisses, um dem besagten, wenigstens einen Spannungswert zu entsprechen, der während des gegenwärtigen und/oder einem vorangehenden Aus-Zeitintervall gemessen wurde.

2. Regelverfahren gemäß Anspruch 1, umfassend Veränderung des Kontrollsignals (40; 222) durch die folgenden Schritte:
- Vergleich der zwischen den besagten Ausgangsanschlüssen (50; 217, 218) während eines Aus-Zeitintervalls gemessenen Spannung mit einem Schwellwert;
- Veränderung des besagten Steuersignals (40; 222), um in Gegenwart von wenigstens zwei aufeinanderfolgenden Intervallen, in welchen die gemessene Spannung zwischen den besagten Ausgangsanschlüssen (50; 217, 218) kleiner ist als der Schwellwert, das Tastverhältnis gemäß einem vorgegebenen Wert einzustellen.

3. Regelverfahren gemäß Anspruch 2, ferner umfassend die folgenden Schritte:
a) Zählen aufeinanderfolgender Aus-Zeitintervalle, während der die gemessene Spannung an den besagten Ausgangsanschlüssen (50; 217, 218) kleiner ist als der Schwellwert, und Stoppen des Zählens, wenn die gemessene Spannung während eines Aus-Zeitintervalls größer ist als der besagte Schwellwert;
b) wenn das Zählen gestoppt wurde und die Anzahl der bei Punkt a) gezählten Intervalle kleiner ist als ein erster Wert, dann
b1) wenn die Einschaltdauer nicht null ist, Erzeugen des Steuersignals derart, dass die Einschaltdauer auf null gesetzt wird, damit die Lampe (210) aus bleibt, und Zurücksetzen des Zählens, anderenfalls;
b2) wenn die Einschaltdauer null ist, Erzeugen des Steuersignals (222) derart, dass die Einschaltdauer auf einen nicht verschwindenden Nennwert festgelegt wird, damit die Lampe (210) in einer Schaltperiode mit einer mittleren Nenn-Lichtintensität eingeschalten wird, und Zurücksetzen des Zählens;
c) wenn die Anzahl der bei Punkt a) gezählten Intervalle gleich oder größer ist als der besagte erste Wert, Variieren des Steuersignals (222), um den Wert des Tastverhältnisses einzustellen, sofern das Zählen gestoppt wurde, solchermaßen Zurücksetzen des besagten Zählens.

4. Eine Vorrichtung zum Regeln der Leuchtintensität wenigstens einer, zwischen Ausgangsanschlüssen (50; 217, 218) angeschlossenen Festkörperlampe (90; 211) in einem Schaltbetrieb, wobei die besagte Regelvorrichtung umfasst:
- einen Schaltkreis (20), konfiguriert zum Erzeugen einer (-es) Versorgungsspannung/-stroms (Vbus) für die Lampe (90; 211) an den besagten Ausgangsklemmen (50; 217, 218) während des Betriebs, und zum zyklischen Umschalten derselben zwischen einem ersten Niveau (Von), eingerichtet, um die Lampe (90; 211) während eines Ein-Zeitintervalls einzuschalten, und einem zweiten Niveau (Vpol), eingerichtet, um die Lampe (90; 211) während eines Aus-Zeitintervalls auszuschalten, mit einem Tastverhältnis, das der verlangten Lichtstärke entspricht;
- einen zwischen den besagten Ausgangsanschlüssen (50; 217, 218), elektrisch angeschlossenen, elektrischen Bipol (80, 70; 209, 210) mit einem monostabilen, normalerweise offenen und manuell aktivierbaren Schalter (70; 210) in Reihe mit einem Widerstandselement (80; 209) oder mit einer Diode;
**dadurch gekennzeichnet, dass** sie umfasst:
- einen Sensorschaltkreis (120; 202, 203) zum Sensieren eines Spannungswertes an den besagten Ausgangsanschlüssen (50; 217, 218) während der Aus-Zeitintervalle;
- einen mit dem Sensorschaltkreis (120; 202, 203) verbundenen Steuerschaltkreis (100; uP), ausgelegt zum Erzeugen eines Steuersignals (40; 222) für die Variation des besagten Tastverhältnisses, um dem besagten, wenigstens einen Spannungswert zu entsprechen, der während des gegenwärtigen und/oder einem vorangehenden Aus-Zeitintervall gemessen wurde.

5. Die Regelvorrichtung von Anspruch 4, wobei der Sensorschaltkreis (202, 203) dazu ausgelegt ist, eine Rückkopplungsspannung entsprechend der (des) Versorgungsspannung/-stroms für die Lampe zu erzeugen, und wobei der Steuerschaltkreis (uP) umfasst:
- einen Schwellwertkomparator (201, 207, 208), ausgelegt zum Vergleichen der während der Aus-Zeitintervalle gemessenen Rückkopplungsspannung mit einem Schwellwert, und zur Erzeugung eines logischen Signals (221) mit einem durch den Vergleich ermittelten Wert;
- einen Mikroprozessor (uP), ausgelegt zum Empfangen des besagten logischen Signals (221) als Engangssignal und zum Steuern des Schaltnetzwerks für das Dekrementieren des Taktverhältnisses gemäß einem vorgegebenen Wert bei jedem Zyklus, in welchem die gemessene Rückkopplungsspannung kleiner ist als der besagte Schwellwert.

6. Die Regelvorrichtung gemäß Anspruch 5, wobei der Mikroprozessor (uP) zusätzlich dazu programmiert ist, um folgende Operationen auszuführen:
a) Zählen aufeinanderfolgender Aus-Zeitintervalle, während der die gemessene Rückkopplungsspannung an den besagten Ausgangsanschlüssen (50; 217, 218) kleiner ist als der Schwellwert, und Stoppen des Zählens, wenn die gemessene Spannung während eines Aus-Zeitintervalls größer ist als der besagte Schwellwert;
b) wenn das Zählen gestoppt wurde und die Anzahl der bei Punkt a) gezählten Intervalle kleiner ist als ein erster Wert, dann
b1) wenn die Einschaltdauer nicht null ist, Erzeugen des Steuersignals derart, dass die Einschaltdauer auf null gesetzt wird, damit die Lampe (210) aus bleibt, und Zurücksetzen des Zählens, anderenfalls;
b2) wenn die Einschaltdauer null ist, Erzeugen des Steuersignals (222) derart, dass die Einschaltdauer auf einen nicht verschwindenden Nennwert festgelegt wird, damit die Lampe (210) in einer Schaltperiode mit einer mittleren Nenn-Lichtintensität eingeschalten wird, und Zurücksetzen des Zählens;
c) wenn die Anzahl der bei Punkt a) gezählten Intervalle gleich oder größer ist als der besagte erste Wert, Variieren des Steuersignals (222), um den Wert des Tastverhältnisses einzustellen, sofern das Zählen gestoppt wurde, solchermaßen Zurücksetzen des besagten Zählens.

7. Die Regelvorrichtung von Anspruch 5, wobei der Schwellwertkomparator (201, 207, 208) umfasst:
- einen Transistor (201), ausgelegt, um durch die besagte Rückkopplungsspannung gesteuert zu werden, und um in einem leitenden Zustand zu arbeiten, wenn die Rückkopplungsspannung größer ist als der besagte Schwellwert, oder in einem Aus-Zustand wenn die Rückkopplungsspannung kleiner ist als der besagte Schwellwert;
- ein Widerstandsnetzwerk (207, 208), angeschlossen als Last des besagten Transistors (201), mit einem Anschluss, an welchem während des Betriebs eine Spannung zur Verfügung gestellt wird, die dem besagten logischen Signal (221) entspricht.

8. Die Regelvorrichtung gemäß einem der Ansprüche 5 bis 7, wobei der besagte Sensorschaltkreis einen resistiven Spannungsteiler (202, 203) umfasst, mit einem Mittelabgriff, an welchem die besagte Rückkopplungsspannung zur Verfügung gestellt wird.

9. Die Regelvorrichtung gemäß einem der vorhergehenden Ansprüche, umfassend eine Stromversorgung mit Eingangsanschlüssen (10; 219, 220), ausgelegt zum Anschluss an ein Stromnetz, sowie Ausgangsanschlüsse (50; 217, 218), dazu ausgelegt, um die (den) besagte(n) Versorgungsspannung/-strom zur Verfügung zu stellen.

10. Die Regelvorrichtung gemäß einem der Ansprüche 5 bis 9, wobei die besagte Stromversorgung einen Hilfsanschluss aufweist, an welchem während des Betriebs eine Hilfsgleichspannung (Vaux) zur Verfügung gestellt wird, wobei der Hilfsanschluss an einen Versorgungsanschluss (217) des Mikroprozessors (uP) gekoppelt ist.

## Revendications

1. Procédé de régulation, dans un mode de commutation, de l'intensité lumineuse d'au moins une lampe à semi-conducteurs (90 ; 211) reliée entre des bornes de sortie (50 ; 217, 218), comprenant les étapes suivantes :
générer, au niveau desdites bornes de sortie (50 ; 217, 218) pendant le fonctionnement, une tension/ courant d'alimentation (Vbus) destiné à la lampe (90 ; 211), et à la commuter cycliquement entre :
- un premier niveau (Von), adapté pour allumer la lampe (90 ; 211) pendant des intervalles d'activation ;
- un second niveau (Vpol), adapté pour éteindre la lampe (90 ; 211) pendant des intervalles de désactivation ;
- avec un cycle de fonctionnement correspondant à un niveau lumineux demandé ;
prévoir et relier électriquement entre lesdites bornes de sortie (50 ; 217, 218) un bipôle électrique (80, 70 ; 209, 210) possédant un commutateur monostable (70 ; 210) normalement en position ouverte relié en série avec un élément résistif (80 ; 209) ou avec une diode ;
activer manuellement ledit commutateur monostable (70 ; 210) afin de relier électriquement ledit élément résistif (80 ; 209) ou ladite diode auxdites bornes de sortie (50 ; 217, 218) ;
**caractérisé en ce que** ledit procédé comprend les étapes suivantes détecter une valeur de tension au niveau desdites bornes de tension (50 ; 217, 218) pendant des intervalles de désactivation ;
générer un signal de commande (40 ; 222), destiné à faire varier ledit cycle de fonctionnement, de façon à correspondre à au moins ladite valeur de tension détectée pendant un intervalle de désactivation actuel et/ou précédent.

2. Procédé de régulation selon la revendication 1, comprenant la variation dudit signal de commande (40 ; 222) par le biais des étapes suivantes :
la comparaison avec un seuil de la tension détectée entre lesdites bornes de sortie (50 ; 217, 218) pendant un intervalle de désactivation ;
la variation dudit signal de commande (40 ; 222) afin d'ajuster selon une valeur préétablie le cycle de fonctionnement en présence d'au moins deux intervalles consécutifs pendant lesquels la tension détectée entre lesdites bornes de sortie (50 ; 217, 218) est inférieure audit seuil.

3. Procédé de régulation selon la revendication 2, comprenant en outre les étapes suivantes :
a) le comptage des intervalles de désactivation consécutifs pendant lesquels la tension détectée au niveau desdites bornes de sortie (50 ; 217, 218) est inférieure audit seuil, et l'arrêt du comptage lorsque la tension détectée pendant un intervalle de désactivation est supérieure audit seuil ;
b) si le comptage a été arrêté et si le nombre d'intervalles comptés au point a) est inférieur à une première valeur, alors
b1) si ledit cycle de fonctionnement n'est pas nul, la génération du signal de commande de façon à rendre nul le cycle de fonctionnement de façon à garder la lampe (210) éteinte, et la réinitialisation dudit comptage, sinon
b2) si ledit cycle de fonctionnement est nul, la génération du signal de commande (222) de façon à fixer le cycle de fonctionnement à une valeur non nulle nominale afin d'allumer la lampe (210) avec une intensité lumineuse moyenne nominale pendant une période de commutation, et la réinitialisation dudit comptage ;
c) si le nombre d'intervalles comptés au point a) est supérieur ou égal à ladite première valeur, la variation du signal de commande (222) afin d'ajuster la valeur du cycle de fonctionnement dans la mesure où le comptage est arrêté, de façon à réinitialiser ledit comptage.

4. Dispositif de régulation, en mode de commutation, de l'intensité lumineuse d'au moins une lampe à semi-conducteurs (90 ; 211) reliée entre des bornes de sortie (50 ; 217, 218), ledit dispositif de régulation comprenant :
un circuit (20) configuré pour générer, au niveau desdites bornes de sortie (50 ; 217, 218), pendant le fonctionnement, une tension/ courant d'alimentation (Vbus) de la lampe (90), et pour la commuter cycliquement entre un premier niveau (Von), adapté pour allumer la lampe (90) pendant des intervalles d'activation, et un second niveau (Vpol), adapté pour éteindre la lampe (90) pendant des intervalles de désactivation, avec un cycle de fonctionnement correspondant à un niveau lumineux demandé ;
un bipôle électrique (80, 70 ; 209, 210) relié électriquement entre lesdites bornes de sortie (50 ; 217, 218) et possédant un commutateur monostable (70 ; 210) à activer manuellement et normalement en position ouverte, relié en série avec un élément résistif (80 ; 209) ou avec une diode ;
**caractérisé en ce qu'**il comprend
un circuit de détection (120 ; 202, 203) destiné à détecter une valeur de tension au niveau desdites bornes de sortie (50 ; 217, 218) pendant les intervalles de désactivation ;
un circuit de commande (100 ; uP) relié au circuit de détection (120 ; 202, 203), et configuré pour générer un signal de commande (40 ; 222), destiné à faire varier ledit cycle de fonctionnement, de façon à correspondre à au moins ladite valeur de tension détectée pendant un intervalle de désactivation actuel et/ou précédent.

5. Dispositif de régulation selon la revendication 4, dans lequel le circuit de détection (202, 203) est configuré pour générer une tension de retour correspondant à la tension/ courant d'alimentation de la lampe, et ledit circuit de commande (uP) comprend :
un comparateur de seuil (201, 207, 208) configuré pour comparer avec un seuil la tension de retour détectée pendant les intervalles de désactivation, et pour générer un signal logique (221) possédant une valeur déterminée par la comparaison ;
un microprocesseur (uP) configuré pour recevoir en entrée ledit signal logique (221) et pour commander le réseau de commutation afin de réduire d'une valeur préétablie le cycle de fonctionnement lors de chaque cycle au cours duquel la tension de retour détectée est inférieure audit seuil.

6. Dispositif de régulation selon la revendication 5, dans lequel ledit microprocesseur (uP) est en outre programmé pour exécuter les opérations suivantes :
a) compter des intervalles de désactivation consécutifs pendant lesquels la tension de retour détectée est inférieure audit seuil et arrêter le comptage lorsque la tension détectée pendant un intervalle de désactivation est supérieure audit seuil ;
b) si le comptage a été arrêté et si le nombre d'intervalles comptés au point a) est inférieur à une première valeur, alors
b1) si ledit cycle de fonctionnement n'est pas nul, la génération du signal de commande (222) de façon à rendre nul le cycle de fonctionnement de façon à garder la lampe (210) éteinte, et la réinitialisation dudit comptage, sinon
b2) si ledit cycle de fonctionnement est nul, la génération du signal de commande (222) de façon à fixer le cycle de fonctionnement à une valeur non nulle nominale afin d'allumer la lampe (210) avec une intensité lumineuse moyenne nominale pendant une période de commutation, et la réinitialisation dudit comptage ;
c) si le nombre d'intervalles comptés au point a) est supérieur ou égal à ladite première valeur, la variation du signal de commande (222) afin d'ajuster la valeur du cycle de fonctionnement dans la mesure où le comptage est arrêté, de façon à réinitialiser ledit comptage.

7. Dispositif de régulation selon la revendication 5, dans lequel ledit comparateur de seuil (201, 207, 208) comprend :
un transistor (201) configuré pour être contrôlé avec ladite tension de retour et pour fonctionner dans un état de conduction lorsque la tension de retour est supérieure audit seuil, ou dans un état de désactivation lorsque la tension de retour est inférieure audit seuil ;
un réseau résistif (207, 208), relié comme une charge dudit transistor (201), possédant une borne au niveau de laquelle, pendant le fonctionnement, une tension correspondant audit signal logique (221) est rendue disponible.

8. Dispositif de régulation selon l'une des revendications 5 à 7, dans lequel ledit circuit de détection comprend un séparateur de tension résistive (202, 203) possédant un contact intermédiaire au niveau duquel ladite tension de retour est rendue disponible.

9. Dispositif de régulation selon l'une des revendications précédentes, comprenant une alimentation électrique possédant des bornes d'entrée (10 ; 219, 220) configurées pour être reliées au secteur et des bornes de sortie (50 ; 217, 218) adaptées pour fournir ladite tension/ courant d'alimentation.

10. Dispositif de régulation selon les revendications 5 et 9, dans lequel ladite alimentation électrique possède une borne auxiliaire au niveau de laquelle, pendant le fonctionnement, une tension CC auxiliaire (Vaux) est rendue disponible, la borne auxiliaire étant reliée à une borne d'alimentation (217) du microprocesseur (uP).
